# EUROPEAN PATENT SPECIFICATION

(11) **EP 2 927 617 B1**
(45) Date of publication and mention of the grant of the patent: **25.12.2019**
(21) Application number: 15161875.8
(22) Date of filing: 31.03.2015
(51) Int. Cl.: F24F 13/20, F24F 13/22, F24F 1/02, F24F 3/14, F24F 11/00, G01F 23/56, F24F 11/30, F24F 11/89

(54) **DEHUMIDIFIER**
ENTFEUCHTER
DÉSHUMIDIFICATEUR

(30) Priority: 31.03.2014 KR 20140038279; 18.07.2014 KR 20140091352
(43) Date of publication of application: 07.10.2015
(73) Proprietor: LG Electronics Inc., Yeongdeungpo-gu Seoul 150-721 (KR)
(72) Inventor: Jeon, Ilsoo, 153-802 Seoul (KR); Yoon, Sangyoun, 153-802 Seoul (KR); Roh, Eunhyeon, 153-802 Seoul (KR); Yoon, Sangjun, 153-802 Seoul (KR)
(74) Representative: Vossius & Partner Patentanwälte Rechtsanwälte mbB

(56) References cited:
- EP-A1- 0 669 523
- CN-A- 1 892 122
- JP-A- 2012 225 774
- KR-A- 20020 096 310
- US-A- 5 156 048
- US-A- 5 271 237

## Description

### CROSS-REFERENCE TO RELATED APPLICATIONS

The present application claims benefits of priority to Korean Patent Application Nos. 10-2014-0038279, filed March 31, 2014 and 10-2014-0091352, filed July 18, 2014, the subject matter of which is incorporated herein by reference.

### BACKGROUND

### 1. Field

Embodiments may relate to a dehumidifier.

### 2. Background

Dehumidifiers are home appliances that suction air within a specific space to remove moisture contained in the air and discharge the dehumidified air into the specific space to maintain the air within the specific space in a dried state.

Such a dehumidifier suctions air within a specific space to allow the suctioned air to pass through a heat exchanger including a condenser and an evaporator and to be heat-exchanged with a refrigerant flowing along insides of the condenser and evaporator, thereby removing moisture contained in the air.

The evaporator may absorb heat from surrounding air to evaporate a liquid refrigerant. Thus, air passing through the evaporator may decrease in temperature through the heat-exchange with the refrigerant.

Since the air passing through the evaporator decreases in temperature, moisture contained in the air may be condensed to form dew on a surface of the evaporator.

The air that decreases in humidity and temperature while passing through the evaporator may be heated and dried while passing through the condenser.

The dehumidifier may dehumidify and dry air having relatively high humidity to change into dehumidified and dried air and then discharge the air into an indoor space.

In recent years, as residential space is expanded, and a living environment changes, a high-capacity and multifunctional humidifier may be required or desired.

One arrangement may have a structure in which, if a water level of a water storage tank is below a predetermined level, a switch is turned on by magnetism of a magnet to allow the dehumidifier to operate, and if a water level of the water storage tank is above the predetermined level, the switch is turned off to allow operation of the dehumidifier to be stopped.

If an error with respect to a lead switch for detecting the water level of the water storage tank or reduction in magnetism of the magnet does not respond, the dehumidifier may continuously operate even though the water level of the water storage tank exceeds the predetermined level. As a result, condensed water stored in the water storage tank may overflow to leak to outside the water storage tank.

US 5,271,237 relates to an apparatus for removing condensate generated by fan coils that are employed in a heating, ventilation and air conditioning system such as a heat pump thermal distribution system or an air conditioner, wherein the apparatus comprises a control unit configured to, based on results received from sensors, control operation of the apparatus and generate an alarm signal.

### SUMMARY

In one embodiment, a dehumidifier includes: a main body defining an outer appearance of the dehumidifier, the main body being disposed in a water tank chamber; a heat exchange unit mounted inside the main body; and a water tank mounted on the water tank chamber or separated from the water tank chamber through a side surface of the main body, the water tank storing condensed water generated in the heat exchange unit. A movable member may be mounted inside the water tank to vertically move according to a water level of the condensed water stored in the water tank. One or plurality of first sensors mounted on a wall defining the water tank chamber may detect the movable member. A second sensor mounted on a position of the wall, which is higher than the first sensors may detect the movable member. A control unit receiving the detected results of the first and second sensors may control an operation of the heat exchange unit or an occurrence of an alarm signal according to the received results.

Details of one or more embodiments may be set forth in the accompanying drawings and the description below. Other features may be apparent from the description and drawings.

### BRIEF DESCRIPTION OF THE DRAWINGS

Embodiments may be described in detail with reference to the following drawings in which like reference numerals refer to like elements and wherein:
Fig. 1 is a front perspective view illustrating an outer appearance of a dehumidifier according to an embodiment;
Fig. 2 is a rear perspective view illustrating the outer appearance of the dehumidifier according to an embodiment;
Fig. 3 is an exploded perspective view illustrating inner constitutions of the dehumidifier according to an embodiment;
Fig. 4 is a front perspective view illustrating a state in which a water tank of the dehumidifier is separated according to an embodiment;
Fig. 5 is a rear perspective view illustrating a state in which the water tank of the dehumidifier is separated according to an embodiment;
Fig. 6 is a front perspective view illustrating the water tank of the dehumidifier according to an embodiment;
Fig. 7 is a front perspective view illustrating a state in which a portion of a water tank cover of the dehumidifier is opened according to an embodiment;
Fig. 8 is a rear perspective view illustrating the water tank of the dehumidifier according to an embodiment;
Fig. 9 is a rear perspective view illustrating the state in which a portion of the water tank cover of the dehumidifier is opened according to an embodiment;
Fig. 10 is an exploded perspective view illustrating the water tank of the dehumidifier according to an embodiment;
Fig. 10A is an exploded perspective view illustrating a movable member of the dehumidifier according to an embodiment;
Fig. 11 is a partial cross-sectional view illustrating a portion of the water tank of the dehumidifier according to an embodiment;
Fig. 12 is a partial cross-sectional view illustrating a portion of the water tank of the dehumidifier when viewed in a different direction according to an embodiment;
Fig. 13 is a perspective view illustrating the water tank cover of the dehumidifier according to an embodiment;
Fig. 14 is an exploded perspective view illustrating the water tank of the dehumidifier according to an embodiment;
Fig. 15 is a front perspective view illustrating the state in which the water tank of the dehumidifier is separated according to an embodiment;
Fig. 16 is a rear perspective view illustrating the state in which the water tank of the dehumidifier is separated according to an embodiment; and
Fig. 17 is a perspective view illustrating an operation for discarding condensed water received in the water tank of the dehumidifier according to an embodiment.

### DETAILED DESCRIPTION

Exemplary embodiments may be described in detail with reference to the accompanying drawings.

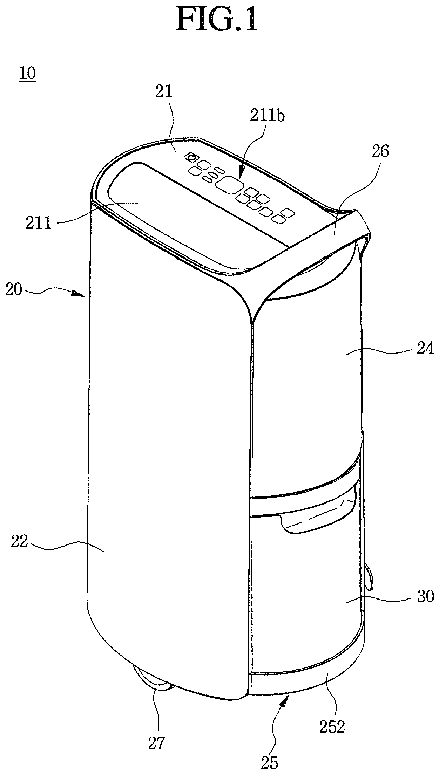

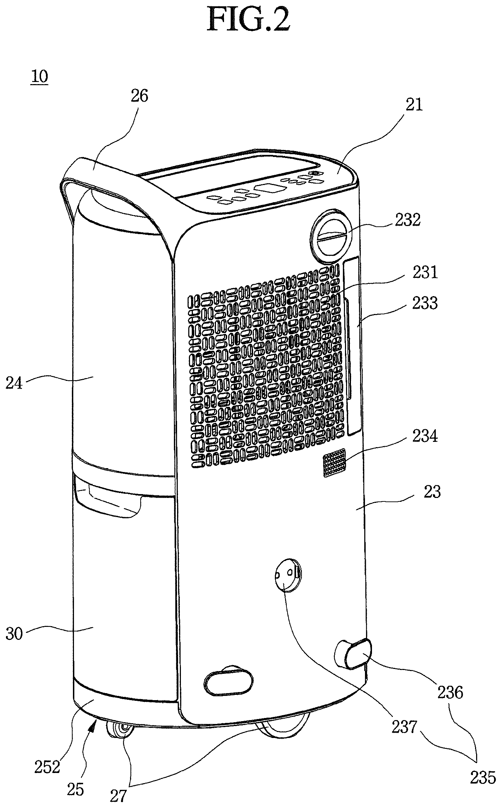

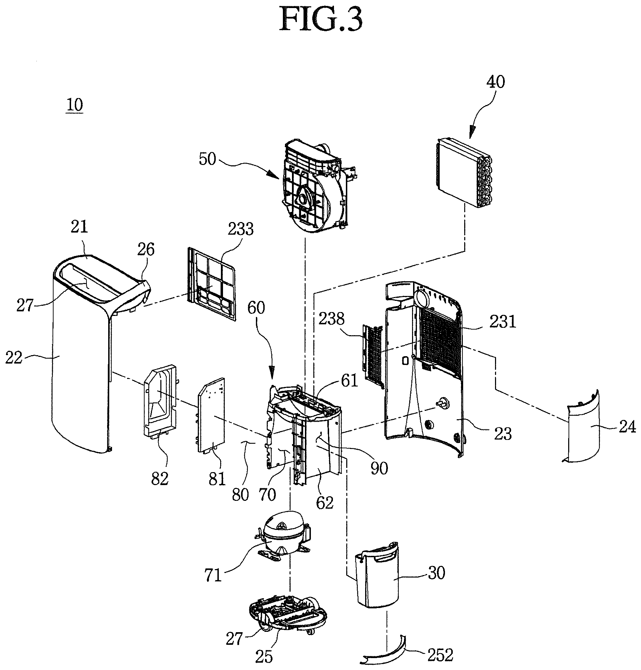

Fig. 1 is a front perspective view illustrating an outer appearance of a dehumidifier according to an embodiment. Fig. 2 is a rear perspective view illustrating the outer appearance of the dehumidifier according to an embodiment. Fig. 3 is an exploded perspective view illustrating inner constitutions of the dehumidifier according to an embodiment.

Referring to Figs. 1 to 3, a dehumidifier 10 may include a main body 20 that defines an outer appearance of the dehumidifier 10. The main body 20 may include an upper panel 21 defining an outer appearance of a top surface, a front panel 22 defining an outer appearance of a front surface, a rear panel 23 defining an outer appearance of a surface facing the front panel 22, a side panel 24 defining a portion of an outer appearance of a right surface, and a base 25 defining an outer appearance of a bottom surface. The rear panel 23 may include an inflow hole 231 for air from outside the main body 20 to be introduced into the main body 20.

The main body 20 may be formed of a material having strength above a predetermined level to protect a plurality of components mounted in an inner space against an external impact.

An upper handle 26, to be grasped by a user when the user intends to move the main body 20 to a desired space, may protrude from an upper portion of the main body 20. A wheel 27, for easily moving the main body 20 when the user intends to move the main body 20 in the state where the user grasps the upper handle 26, may be mounted on the base 25.

One end of the upper handle 26 may be disposed on an edge portion at which an upper end of the front panel 22 and a front end of the upper panel 21 meet each other. The other end of the upper handle 26 may be disposed on an edge portion at which an upper end of the rear panel 23 and a rear end of the upper panel 21 meet each other. The upper handle 26 may have a bar shape that is rounded in an arch shape so that a central portion of the upper handle 26 has an upward convexly curved surface.

Since the upper handle 26 is coupled to the upper panel 21, the front panel 22, and the rear panel 23 to form the arch shape, a user may easily grasp the upper handle 26.

The upper handle 26 is not limited to the above-described shape. For example, the upper handle 26 may have various shapes that are capable of being easily grasped by the user.

The upper handle 26 may be disposed at a position that is adjacent to a detachment surface of the water tank 30, as will be described below. Since the upper handle 26 is disposed on an upper edge portion of the main body 20, which is adjacent to a position at which the water tank 30 is disposed, the user may confirm a water level of the water tank 30 when the user grasps the upper handle 26 to move the dehumidifier 10.

A discharge hole 211, through which air within the main body 20 is discharged to the outside, may be defined in the upper panel 21 of the main body 20. A second discharge hole 232 may be further defined in an upper portion of the rear panel 23 as a unit for discharging the air within the main body 20 to outside in addition to the discharge hole 211. A discharge accessory may be coupled to the second discharge hole 232 so that dehumidified air is discharged through the discharge accessory.

A cap may be mounted on the second discharge hole 232 to selectively open or close the second discharge hole 232. Thus, when the second discharge hole 232 is not used, the second discharge hole 232 may be covered by the cap. On the other hand, when the second discharge hole 232 is used, the cap may be separated from the second discharge hole 232 to open the second discharge hole 232.

The discharge accessory may include a shoe drying accessory for drying shoes and/or a wardrobe drying accessory for drying a wardrobe.

When the discharge accessory is coupled to the second discharge hole 232, dehumidified air discharged from the second discharge hole 232 may be guided by the discharge accessory and then discharged into a space in which the dehumidification is required.

However, configurations and positions of the inflow hole 231 and the discharge hole 211 are not limited to the accompanying drawings.

A louver 211a is mounted on the discharge hole 211 defined in the upper panel 21 to open or close the discharge hole 211 as well as adjust a discharge direction of air that is discharged from the main body 20 to an external space. A control panel 211b including a power button for turning a power of the dehumidifier 10 on/off, a manipulation unit for manipulating an operation of the dehumidifier 10 by the user, and a display unit for displaying operation information of the dehumidifier 10 or the present humidity may be disposed at any position of the upper panel 21, which is spaced apart from the discharge hole 211.

The user may select desired humidity through the manipulation unit. When the user sets a desired humidity, a control unit may compare the present humidity to the set humidity to control operations of a compressor and a fan assembly.

For example, when it is determined that the present humidity approaches the humidity desired by the user, operation of the compressor is stopped. Additionally, the fan assembly may be maintained to a low fan rotation rate or stopped.

The inflow hole 231 (defined in the rear panel 23) may have a grill shape to prevent a foreign substance having a relatively large size from being introduced into the inner space of the main body 220. An air filter 233 for filtering foreign substances contained in air passing through the inflow hole 231 may be further mounted at the inflow hole 231.

A humidity sensor 234, for detecting humidity of a space in which the dehumidifier 10 is installed, may be further mounted on the rear panel 23. The humidity detected by the humidity sensor 234 may be transmitted to the user through the display unit.

A power code unit 235 may be disposed on the rear panel 23. The power code unit 235 may include a code fixing part 236 around which a power code for supplying a power into the main body 20 is wound and a code insertion part 237 in which the power code is temporarily inserted and fixed.

The user may cleanly arrange and store the power code through the power code unit 235 when the dehumidifier 10 is not used. For example, limitations in which the power code contacts a bottom in a state where the power code is unwound, or a movement of the dehumidifier is restricted by an obstacle when the dehumidifier 10 is moved may be solved.

The air filter 233, mounted on the inflow hole 231, may have a mash shape to filter foreign substances contained in the air passing through the inflow hole 231 so that only clean air from which the foreign substances are removed is introduced into the inner space of the main body 20.

The air filter 233 may be inserted and mounted into the main body 20. The user may withdraw the air filter 233 to wash and dry the air filter 233 so as to reuse the air filter 233.

A filter guide 238 for guiding insertion/withdrawal of the air filter 233 may be further disposed on the rear panel 23. The filter guide 238 may extend laterally in a state where the filter guide 238 is spaced a predetermined distance from the inflow hole 231 on the front surface of the rear panel 23 in which the inflow hole 231 is defined.

The air filter 233 may be inserted into or withdrawn from the inner space of the main body 20 through a gap defined between the filter guide 238 and the inflow hole 231. Since the filter guide 238 extends laterally, even though a portion of the human body or foreign substance is inadvertently or mistakenly inserted or introduced into the space in which the air filter 233 is inserted, introduction of the foreign substance into the main body 20 may be prevented by the filter guide 238.

A hole in which the air filter 233 is inserted may be defined in an edge of a side (an edge of a right side in Fig. 2) of the inflow hole 231. Thus, the air filter 233 may be inserted toward an edge of a left side of the inflow hole 231. That is to say, the air filter 233 is not inserted from the rear panel 23 toward the front panel 222, but is inserted from the edge of the right side of the inflow hole 231 toward the edge of the left side of the inflow hole 231. Thus, the air filter 233 and the rear panel 23 may be parallel to each other.

The base 25 (defining the outer appearance of the bottom surface) may be mounted on a lower end of the rear panel 23. The side panel 24 (defining a portion of the outer appearance of the side surface) may be mounted on ends of right sides of the front panel 22 and the rear panel 23.

A water tank 30, for receiving condensed water generated while air is dehumidified, may be mounted on a lower portion of the side panel 24. A portion of the outer appearance of the side surface of the main body 20 may be defined by the water tank 30. The water tank 30 may be described below in detail.

A heat exchange unit 40 heat-exchanged with air introduced through the inflow hole 231 and a fan assembly 50 for forcibly blowing air within the main body 20 are mounted in the inner space of the main body 20.

A frame 60 for supporting the heat exchange unit 40 and the fan assembly 50 is disposed under the heat exchange unit 40 and the fan assembly 50. A compression chamber 70, in which a compressor 71 for compressing a refrigerant is accommodated, is defined in a central portion of the frame 60. An electronic component chamber 80, in which electronic components are mounted, is defined in one side of left and right sides of the compression chamber 70. A water tank chamber 90 (in which the water tank 30 is accommodated) is defined at the other side.

The air passing through the heat exchange unit 40 is heat-exchanged with the refrigerant flowing through the heat exchange unit 40 to decrease in temperature. As a result, moisture contained in the air may be condensed to change into a dried state.

The fan assembly 50 for forcibly blowing the air within the main body 20 is mounted on one side of the heat exchange unit 40. As the fan assembly 50 rotates, external air may be forcibly introduced into the main body through the inflow hole 231. The introduced air may be dehumidified while passing through the heat exchange unit 40. The dehumidified air is discharged to an external space through the discharge hole 211.

The frame 60 is disposed under the heat exchange unit 40 and the fan assembly 50, and the heat exchange unit 40 and the fan assembly 50 are supported by a top surface of the frame 60.

The frame 60 may include an upper frame 61 supporting the heat exchange unit 40 and the fan assembly 50, and a lower frame 62 partitioning a lower space of the upper frame 61 into the compression chamber 70, the electronic component chamber 80, and the water tank chamber 90.

The upper frame 61 may be divided into a portion for supporting the fan assembly 50 and a portion for supporting the heat exchange unit 40.

The portion of the upper frame 60, which supports the heat exchange unit 40, may serve as a drain fan for draining the condensed water that drops down from the heat exchange unit 40. A top surface of the portion of the upper frame 80, which supports the heat exchange unit 40, may have a predetermined inclination to allow the condensed water dropping down from the heat exchange unit 40 to be collected into a predetermined position.

The water collected by the inclination of the top surface of the upper frame 61 may be guided to a top surface of the water tank 30 to drop down. The water dropping into the water tank 30 is stored in the water tank 30.

A lower side of the inner space of the main body 20 may be divided into the electronic component chamber 80, the compression chamber 70, and the water tank chamber 90 by the lower frame 62. The electronic component chamber 80, the compression chamber 70, and the water tank chamber 90 may be arranged in a line. Thus, the main body 20 may be slim to improve aesthetic sensibility of the dehumidifier 10. That is, the main body 20 may have a thin width in a front/rear direction and a relatively long width in a left/right direction to realize slimness of the dehumidifier 10.

An upper end of the lower frame 62 may support the upper frame 61, and a lower end of the lower frame 62 may be supported by the base 25.

Since the lower frame 62 is mounted across in a front/rear direction of a space that is defined by the front panel 22 and the rear panel 22, the lower side of the inner space of the main body 20 may be partitioned into three spaces in the left/right direction of the main body 20.

When the upper frame 61 and the lower frame 62 are viewed from a front side, each of the upper frame 61 and the lower frame 62 may have an approximately "∩" shape. The heat exchange unit 40 and the fan assembly 50 may be disposed at an upper side, and the electronic component chamber 80, the compression chamber 70, and the water tank chamber 90 may be disposed at a lower side. Thus, the electronic component chamber 80 and the water tank chamber 90 are disposed at left and right sides with respect to the compression chamber 70 by the frame 60, respectively.

The compressor 71 for compressing the refrigerant flowing through the heat exchange unit 40 is mounted in the compression chamber 70. A plurality of electronic components may be mounted in the electronic component chamber 80. For example, a main board 81 for controlling the plurality of electronic components may be mounted in the electronic component chamber 80, and a control case 82 for protecting the main board 81 against an external impact may be curved on the main board 81.

The main board 81 may be accommodated in the control case 82, and an opposite side of the control case 82 is covered by a control cover to protect the main board 81 against the external impact.

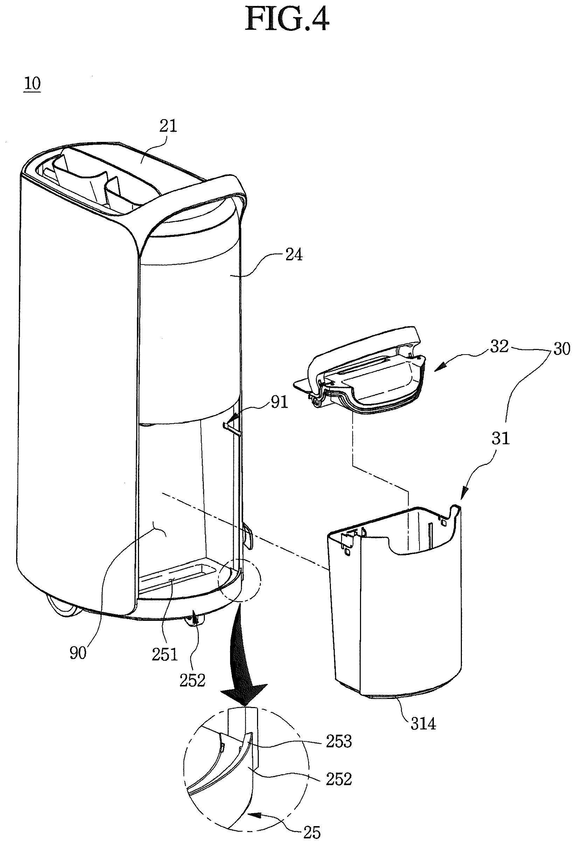

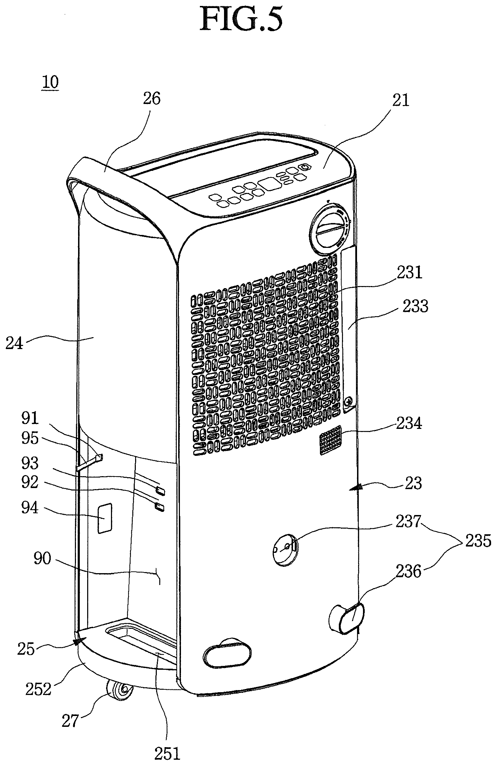

Fig. 4 is a front perspective view illustrating a state in which the water tank of the dehumidifier is separated according to an embodiment. Fig. 5 is a rear perspective view illustrating a state in which the water tank of the dehumidifier is separated according to an embodiment.

Referring to Figs. 4 and 5, the water tank 30 is mounted in the water tank chamber 90. When viewed from a front side, the water tank chamber 90 may have a side surface having an opened hexahedral shape. Thus, the water tank 30 may be detachable in a later direction of the main body 20 through the opened side surface.

A bottom surface of the water tank chamber 90 may be defined by the base 25, and a surface of the water tank chamber 90 except for the opened side surface may be defined by the lower frame 62. A coupling groove 91 for mounting the water tank 30 is defined in an inner surface of the water tank chamber 90. A light emitting part 94 for irradiating light toward the water tank 30, a water level detection sensor 92, and a safety sensor 93 may be mounted on the inner surface of the water tank chamber 90.

Only the water level sensor 92 may be mounted in the water tank chamber 90, and the safety sensor 93 may not be mounted in the water tank chamber 90. However, for improving safety, the safety sensor 93 may be provided.

The water level sensor 92 may detect a position of a movable member 311 that is disposed in the inner space of the water tank 30 to detect a water level of the water tank 30. When a full level of the water tank 30 is detected, the safety sensor 93 may transmit the full level information to the control unit to control an operation of the dehumidifier 10.

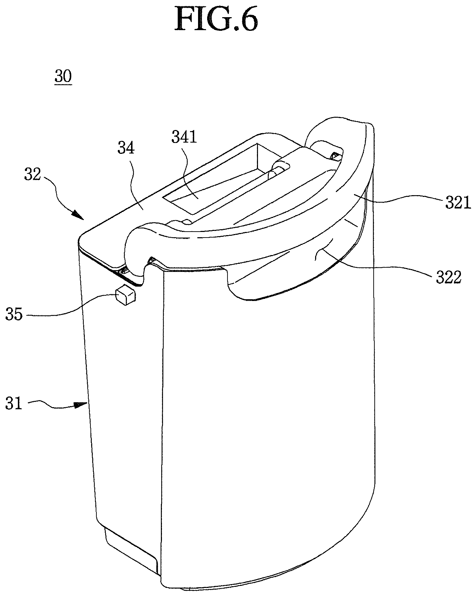

As an end of a coupling module (reference numeral 35 of Fig. 6) is inserted into the coupling groove 91, the water tank 30 is fixed. Since a portion of the coupling module 35 is inserted into the coupling groove 91, a random separation of the water tank 30 may be prevented.

That is, a portion of the coupling module 35 may be inserted into the coupling groove 91 and then mounted. When the coupling module 35 is separated from the coupling groove 91 by an external force of the user, the water tank 30 may be separated from the water tank chamber 90.

A guide part 95 for guiding the portion of the coupling module 35, which is inserted into the coupling grove 91, when the user separates or mounts the water tank 30 is further disposed on the side surface of the water tank chamber 90.

The guide part 95 may have a predetermined space by laterally recessed from the side surface of the water tank chamber 90 to guide a portion of the coupling module 35. In one example, the guide part 95 may be defined as a slit that is formed by cutting the side surface of the water tank chamber 90.

The guide part 95 may have a predetermined curvature to guide movement of the coupling module 35. Alternatively, the guide part 95 may have a predetermined inclination to guide movement of the coupling module 35.

Since the frame 60 surrounds an upper portion and both side portions of the compressor 71, noise generated from the compressor 71 may be reduced.

A base groove 251, for receiving the condensed water dropping in the state where the water tank 30 is separated, may be defined in the bottom surface of the water tank chamber 90 (i.e., a top surface of the base 25 that is disposed under the water tank 30 to support the water tank 30).

The base groove 251 may have a predetermined area and may be recessed downward to collect the condensed water dropping in the state where the water tank 30 is separated from the main body 20. Thus, the structure of the base groove 251 may prevent the condensed water from leaking to outside of the main body 20.

As described above, since leakage of the condensed water to the outside of the main body 20 is prevented by the base groove 251, use convenience of the dehumidifier 10 may be more improved. Since the leakage of the condensed water into the external space of the main body 20, it may prevent the indoor space from being contaminated.

A deco panel 252 may be mounted on a side surface of the base 25. The deco panel 252 may be coupled to a lower end of the water tank 30 and may define a lower end of a right surface of the main body 20.

The deco panel 252 may be rounded with a curvature corresponding to that of the side surface of the base 25, and may be detachably mounted on the side surface of the base 25. A restriction rib 253 for restricting movement of a lower end of the water tank 30 may extend upward from an edge of an upper end of the deco panel 252.

A stepped portion 314, having a shape corresponding to that of the restriction rib 253, may be disposed on an edge of a lower end of the water tank 30. The edge of the lower end of the water tank 30 may be bent toward the inner space to form the stepped portion 314.

The restriction rib 253 may be coupled to match the stepped portion 314 to restrict lateral movement of the lower end of the water tank 30.

Constitutions of the water tank 30 detachably mounted on the main body 20 may be described with reference to Figs. 6 to 14.

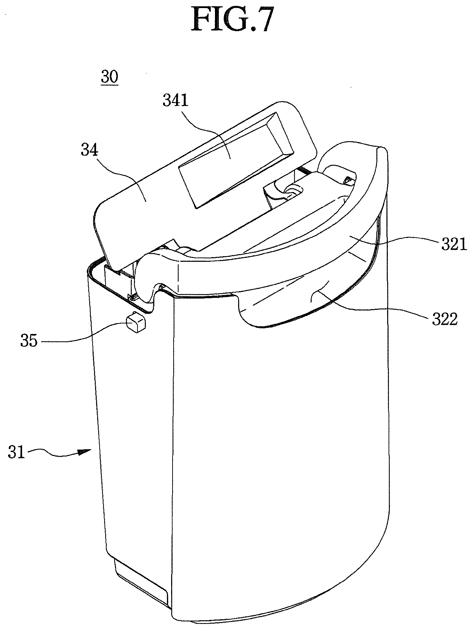

Fig. 6 is a front perspective view illustrating the water tank of the dehumidifier according to an embodiment. Fig. 7 is a front perspective view illustrating a state in which a portion of a water tank cover of the dehumidifier is opened according to an embodiment.

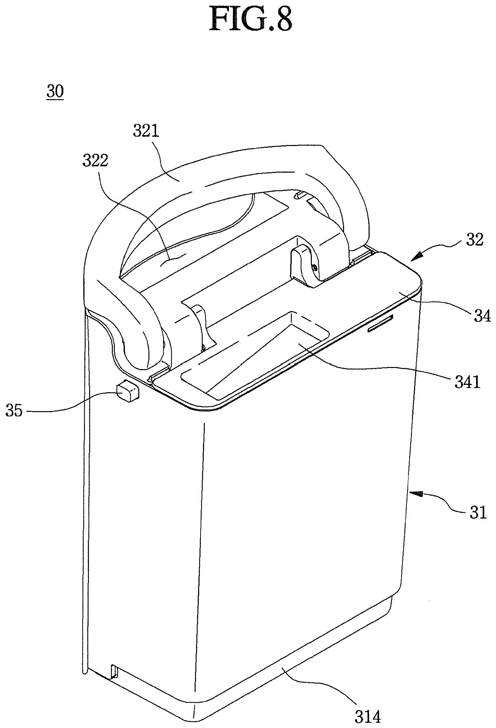

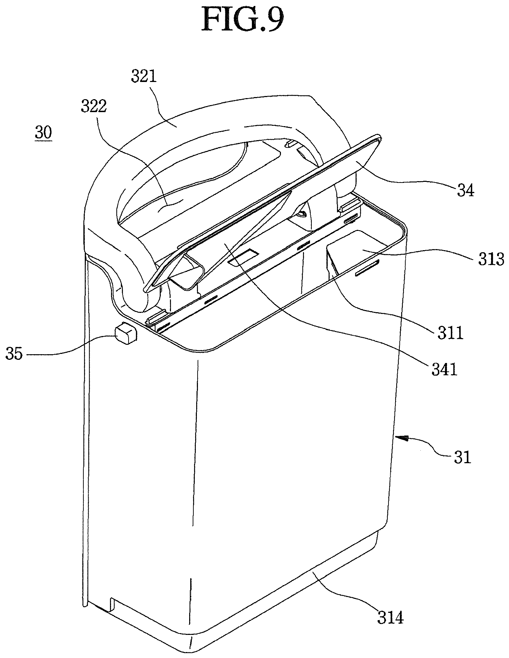

Fig. 8 is a rear perspective view illustrating the water tank of the dehumidifier according to an embodiment. Fig. 9 is a rear perspective view illustrating the state in which a portion of the water tank cover of the dehumidifier is opened according to an embodiment.

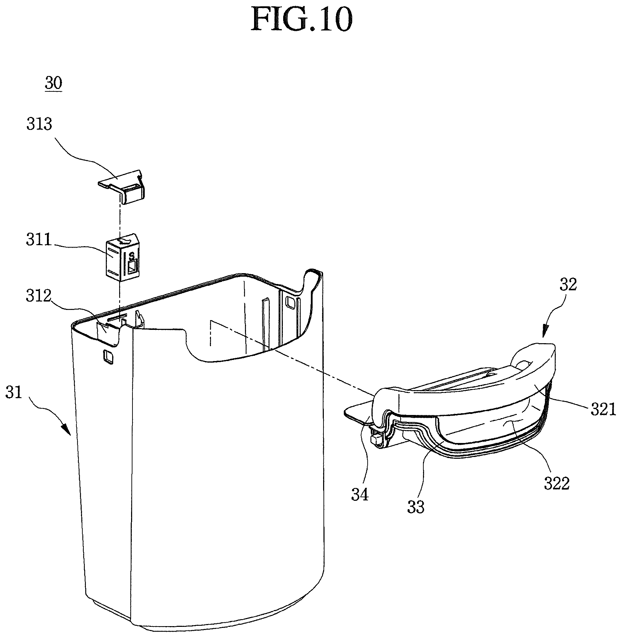

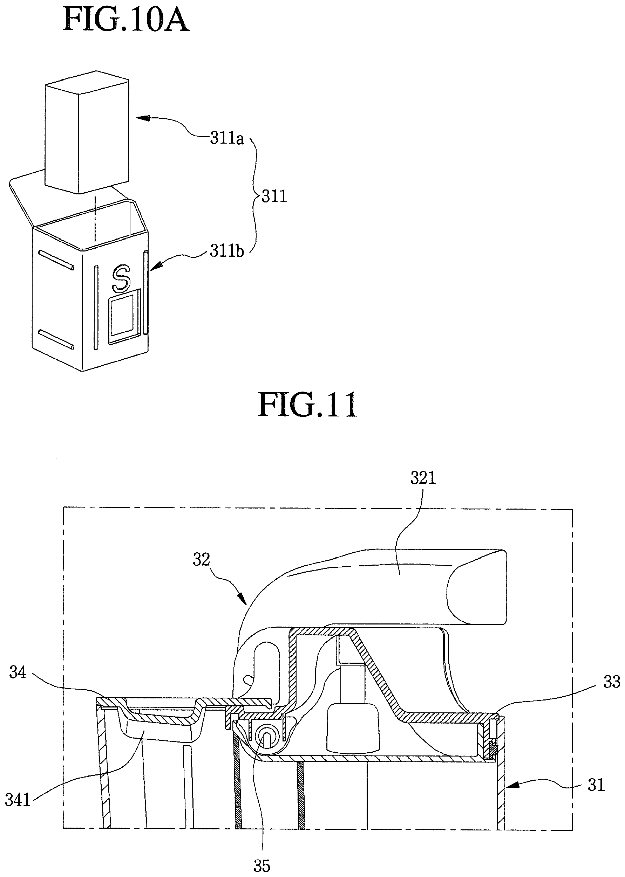

Fig. 10 is an exploded perspective view illustrating the water tank of the dehumidifier according to an embodiment. Fig. 10A is an exploded perspective view illustrating a movable member of the dehumidifier according to an embodiment. Fig. 11 is a partial cross-sectional view illustrating a portion of the water tank of the dehumidifier according to an embodiment.

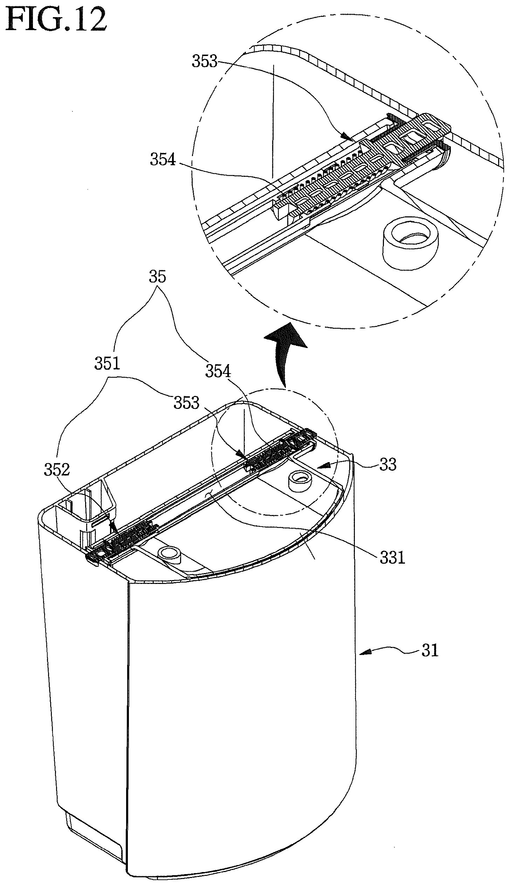

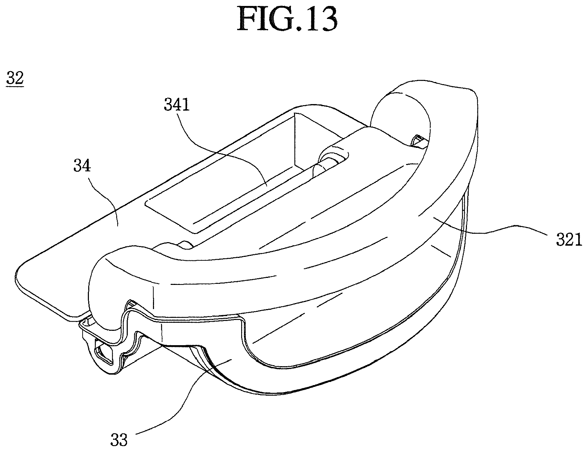

Fig. 12 is a partial cross-sectional view illustrating a portion of the water tank of the dehumidifier when viewed in a different direction according to an embodiment. Fig. 13 is a perspective view illustrating the water tank cover of the dehumidifier according to an embodiment.

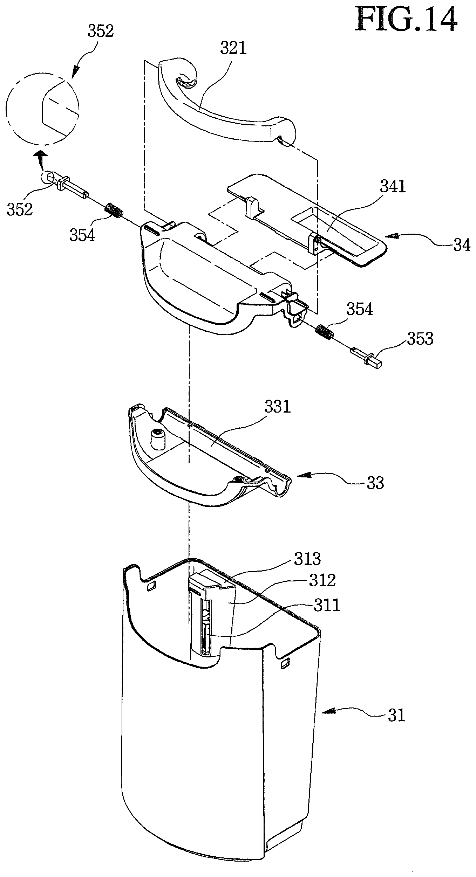

Fig. 14 is an exploded perspective view illustrating the water tank of the dehumidifier according to an embodiment.

Referring to Figs. 6 to 14, the water tank 30 may be mounted on a lower portion of the side panel 24. An outer circumferential surface of the water tank 30 may define a portion of the outer appearance of the side surface of the main body 20.

The water tank 30 may be detachably mounted in a lateral direction with respect to the rear panel 23, and may have a hexahedral shape with a predetermined inner space.

The water tank 30 may be formed of a transparent or translucent material so that the user confirms a level of water filled in the water tank 30. An amount of water filled in the water tank 30 may be confirmed through other methods. For example, although the water tank 30 is formed of the transparent or translucent material in at least one embodiment, a water level may be estimated by detecting a variation in weight of the water tank 30. A weight sensor, for detecting a weight of the water tank 30, may be mounted on the base 25.

The water tank 30 may include a case 31 having an opened top surface and a space for receiving condensed water generated from the heat exchange unit 40, a cover 32 for opening/closing the opened top surface of the case 31, and a coupling module 35 for selective coupling of the cover 32 and the case 31 and selective coupling of the main body 20 and the case 31.

A surface of the case 31, defining a portion of the outer surface of the main body 20, may be rounded with a curvature corresponding to that of the side panel 24 to define an outer appearance of a lower portion of the side panel 24.

The cover 32 may open or close the opened top surface of the case 31. The cover 32 may be provided with at least two portions. A tank handle 321, to be grasped by the user, may be mounted on the cover 32. An outer surface of the tank handle 321 may define a portion of the side surface of the main body 20, as shown in Figs. 1 and 2. That is to say, the outer surface of the tank handle 321 may be disposed between the lower end of the side panel 24 and the upper end of the water tank 30 to define a portion of the side surface of the main body 20.

A grasping groove 322, configured to allow the user to easily grasp the tank handle 321 when the water tank 30 is detached, may be defined at a side of the outer surface of the water tank 30. When the tank handle 321 is grasped to clean the water tank 30 or empty the water tank 30 filled with water, an inference between a back of user's hand and the water tank 30 may be prevented by the grasping groove 322 to improve use convenience. Since the user's hand is disposed in the grasping groove 322, the water tank 30 may be easily tilted to discard the condensed water.

The cover 32 may be divided into at least two portions. More specifically, the cover 32 may include a coupling cover 33 selectively detachable to a top surface of the case 31 and a drain cover 34 rotatably mounted on the coupling cover 33.

The drain cover 34 may be rotatably coupled to the coupling cover 33 to open a portion of the top surface of the case 31. The other portion of the top surface of the case 31 may be selectively opened or closed by the coupling cover 33.

When the user leans the water tank 30 in the state where the user grasps the tank handle 321 to discard the condensed water filled in the case 31, the drain cover 34 may rotate with respect to the coupling cover 33 to open a portion of the top surface of the water tank 30. The condensed water may then be drained through the opened portion of the top surface of the water tank 30.

As described above, the user may rotate the drain cover 34 to open a portion of the top surface of the water tank 30. The coupling cover 33 may be separated from the top surface of the case 31 to open the whole top surface of the water tank 30.

A condensed water guide part 341 having a predetermined area and recessed downward may be defined in the top surface of the drain cover 34. The condensed water dropping from the heat exchange unit 40 may be collected into the upper frame 61. The condensed water collected into the upper frame 61 to drop may then drop into the case 31 through the condensed water guide part 341.

The condensed water guide part 341 may be recessed downward from a top surface of the drain cover 34 to define a recessed space having a predetermined size. A bottom surface of the condensed water guide part 341 may be tilted at a predetermined angle in a direction of the side surface of the case 31. The condensed water dropping into the condensed water guide part 341 may flow along the tilted bottom surface of the condensed water guide part 34 to drop into the inner space of the case 31. A condensed water hole may be defined at an edge of the lowest bottom of the condensed water guide part 341, and the condensed water may be guided to the condensed water guide part 341 and then collected into the case 31.

The upper frame 61 is disposed above the condensed water guide part 341, and the heat exchange unit 40 is provided on the upper frame 61. A portion of the upper frame 61 that performs a function of a drain pan may be disposed above the condensed water guide part 341. The condensed water dropping from the heat exchange unit 40 may be guided to the condensed water guide part 341 via the upper frame 61. The condensed water collected while flowing in a predetermined direction by inclination of the upper frame 61 may drop into the condensed water guide part 341. The condensed water may flow by the inclination of the condensed water guide part 341 to drop into the inner space of the case 31.

A sensor room 312 may be defined in the case 31. A movable member 311, which is vertically movable according to a water level of the condensed water collected into the case 31, may be mounted in the sensor room 312. For example, a floater may be used as the movable member 311.

The sensor room 312 may protrude from an inner circumferential surface of the case 31 to form a predetermined space. A bottom part of the sensor room 312 may communicate with the inner space of the case 31. That is, the condensed water collected into the case 31 may be introduced into the sensor room 312 to float the movable member 311.

The movable member 311 may be vertically movable only within the sensor room 312 and may also be vertically movable according to a water level.

When a water level of the condensed water increases in the inner space of the case 31, the condensed water may be introduced through the opened bottom surface of the sensor room 313, and thus the movable member 311 may ascend or descend in the sensor room 312 according to the water level of the introduced condensed water.

The top surface of the sensor room 312 may be selectively opened or closed by a room cover 313. The room cover 313 may prevent the movable member 311 from being separated to outside through the top surface of the sensor room 312.

The movable member 311 may be a floater having a predetermined magnetism. That is, a magnet may be mounted within the floater, and a hole sensor may be mounted on a vertical wall of the sensor room 312 to detect a water level within the case 31 by detecting a position of the floater. The movable member 311 may be formed of a material having self-magnetism.

More particularly, the floater may include a magnetic body 311a and a movable body 311b surrounding the magnetic body 311a. A portion of the movable body 311b may be cut so that the user confirms whether the magnetic body 311a is accommodated in the movable body 311b by using a naked eye thereof. Thus, a mistake in manufacturing while a product is manufactured (such as a case in which the movable body 311b in which the magnetic body 311a is not provided is accommodated in the sensor room 312) may be prevented. A portion or the whole of the movable body 311b may be formed of a transparent material. Each of top and bottom surfaces of the movable body 311b may have a length enough to be closely attached to each of the top and bottom surfaces of the magnetic body 311a. As a result, a phenomenon in which the magnetic body 311a is vertically moved within the movable body 311b to interrupt detection of an accurate water level may be prevented.

As described above, the water level detection sensor 92 and the safety sensor 93 may be mounted on one side surface of the water tank chamber 90 (i.e., one side surface of the water tank chamber 90 facing the sensor room 315). Additionally, each of the water level detection sensor 92 and the safety sensor 93 may be a hall sensor for detecting magnetism of the magnetic body 311a. The water level detection sensor 92 and the safety sensor 93 may be defined as a first sensor and a second sensor, respectively.

More specifically, when the movable member 311 is detected by the water level detection sensor 92, the control unit may confirm that a water level of the water tank 30 is high to the user and then generate an alarm signal for emptying the water tank 30. A lamp or speaker may be used as a unit for generating a water tank empty signal to transmit the water tank empty signal to the user. Alternatively, a character, an image, a moving picture, or a variable-color signal (in addition to an optical signal or acoustic signal) may be displayed on a display unit of the control panel 211. For example, the variable-color signal may include a color bar graph or Venn diagram which changes from a blue color to a red color as the water level increases.

When the movable member 311 is detected by the safety sensor 93, the control unit may inform that the water tank 30 reaches a full level to the user through the control panel 211 so that the user stops operation of the main body 20. That is, operation of the compressor 70 or the fan assembly 50 may be stopped to prevent the condensed water from being further generated in the heat exchange unit 40.

The water level detection sensor 92 may be vertically provided in plurality so that the water level of the water tank 30 is more accurately detected.

The water tank 30 may be detachable in a lateral direction with respect to the rear panel 23. As described above, since the water tank 30 is detachably mounted in the later direction with respect to the rear panel 23, the main body 20 may be slim in the front/rear direction.

As shown in Figs. 11 and 12, the coupling module 35 for coupling the drain cover 34 to the coupling cover 33 may be mounted on the cover 32. The coupling module 35 may be disposed on the coupling cover 33 and may have both ends respectively passing through both side surfaces of the coupling cover 33.

Both ends of the coupling module 35 may pass through both side surfaces of the coupling cover 33 and then pass through both side surfaces of the case 31, respectively. Both ends of the coupling module, which pass through both side surfaces of the case 31, may be accommodated into the coupling groove 91 to prevent the water tank from being randomly separated.

As described above, the coupling module 35 may be configured to allow the main body 20 and the water tank 30 to be selectively coupled to each other as well as allow the case 31 and the cover 32 to be selectively coupled to each other.

The coupling module 35 may include a coupling rod 351 seated on a module seat part 331 defined in the top surface or inside the coupling cover 33 and an elastic body 354 fitted into an outer circumferential surface of the coupling rod 351 to provide an elastic force for translational motion of the coupling rod 351.

The coupling rod 351 may include a first coupling rod disposed on one side of left and right surfaces of the water tank 30 and a second coupling rod 353 disposed on the other side. One end of the coupling rod 351 may pass through the left or right surface of the case 31 and then be exposed to the outside. The portion of the coupling rod 351, which is exposed to the outside, may be accommodated into the coupling groove 91 when the water tank 30 is mounted on the water tank chamber 90. A through hole, through which the coupling rod 351 passes, may be defined in each of both side surfaces of the case 31 and the cover 32.

A support for supporting the elastic body 354 may be further disposed on the coupling rod 351. The elastic body 354 may be supported by the support to generate an elastic force.

The support may be disposed on the module seat part 331. The support may not be limited to its position if the support supports the elastic body 354 to allow the elastic body 354 to provide an elastic force to the coupling rod 351.

An end of the coupling rod 351, which is exposed to the outside of the case 31, may be smoothly rounded. Thus, when the water tank 30 is coupled to or separated from the main body 20, damage of the end of the coupling rod 351 or a portion of the coupling groove 91 may be prevented.

An operation of the water tank 30 according to an embodiment may now be described.

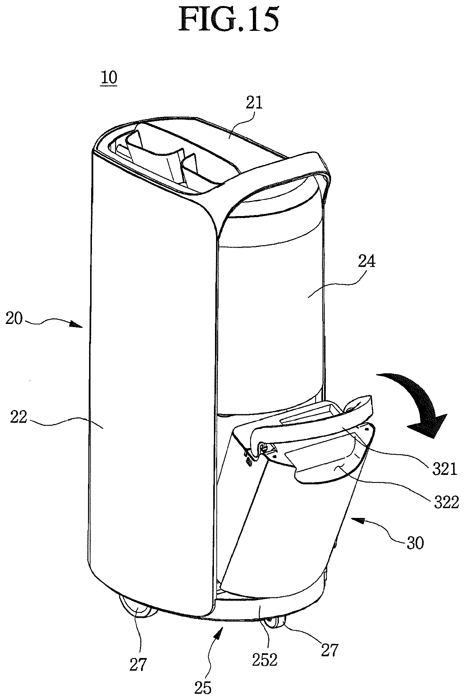

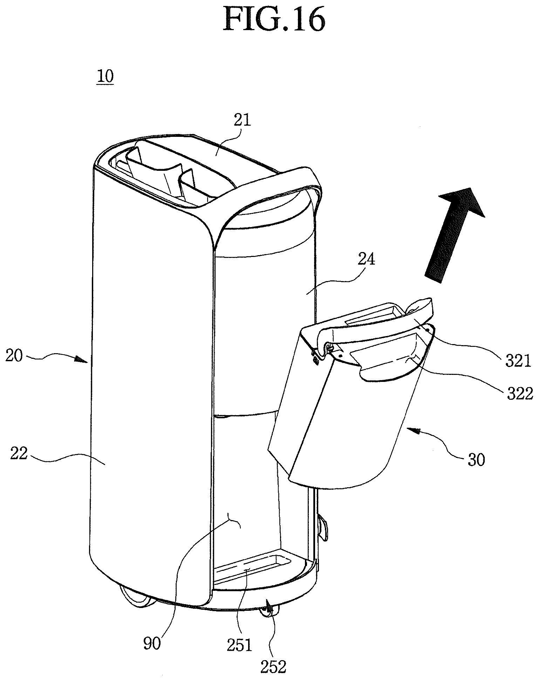

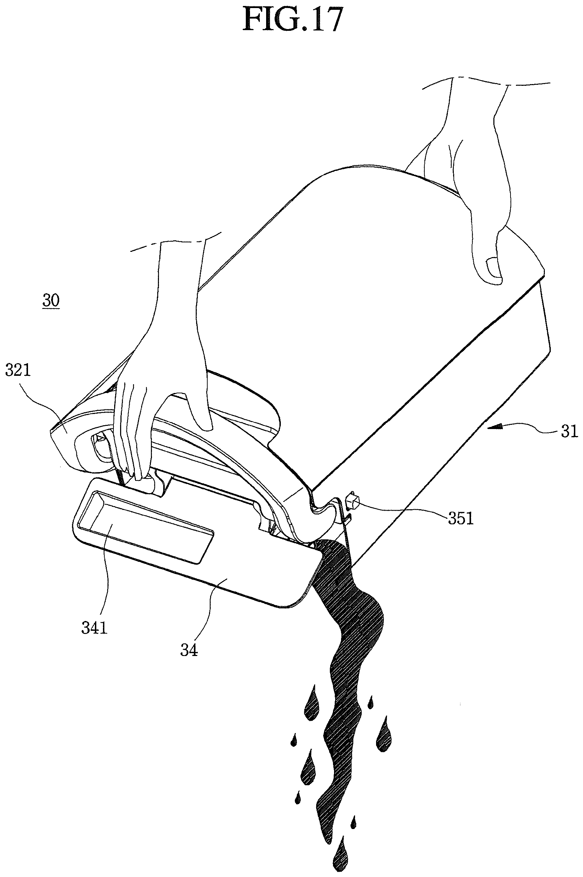

Fig. 15 is a front perspective view illustrating the state in which the water tank of the dehumidifier is separated according to an embodiment. Fig. 16 is a rear perspective view illustrating the state in which the water tank of the dehumidifier is separated according to an embodiment. Fig. 17 is a perspective view illustrating an operation for discarding condensed water received in the water tank of the dehumidifier according to an embodiment.

Referring to Figs. 15 to 17, the user may have to separate the water tank 30 from the main body 20 so as to discard the condensed water filled in the water tank 30. For this, the user may grasp the tank handle 321 to pull the tank handle 321 in a right direction of the main body 20. When the user pulls the tank handle 321, the upper end of the water tank 30 may rotate in the state where movement of the lower end of the water tank 30 is restricted by interference between the restriction rib 253 and the stepped portion 314 formed on the lower end of the case 31.

The coupling rod 351, inserted into the coupling groove 91 by passing through both side surfaces of the water tank 30, may be separated from the coupling groove 91 due to contraction of the elastic body 354 and thus be inserted into the water tank 30. When the end of the coupling rod 351 completely gets out of the guide part 95 while moving along the guide part 95, the end of the coupling rod 351 may protrude from the side surface of the water tank 30 by a restoring force of the elastic body 354.

That is, the upper end of the water tank 30 may be laterally tilted at a predetermined angle with respect to the main body 20. The user may then lift the water tank 30 upward in the state where the water tank 30 is tilted with respect to the main body 20 to separate the water tank 30 from the main body 20. The lifting direction of the water tank may be equal to the tilted direction of the water tank 30.

The user may further horizontally pull the tank handle 321 in the state where the user grasps the tank handle 321 to separate the water tank 30. However, in this example, the condensed water received in the inner space of the water tank 30 may leak to outside of the water tank 30. Thus, it is preferably that the water tank 30 is separated from the main body 20 while moving upward in the state where the water tank 30 is tilted at a predetermined angle.

When the water tank 30 is separated from the main body 30, the user may lift the lower end of the water tank 30 by using the other hand of the user in the state where the user grasps the tank handle 321. Thus, the stored water may be concentrated toward the drain cover 34, and the drain cover 34 may be opened by a flow pressure of the condensed water. As a result, the drain cover 34 may rotate by using the coupled portion of the coupling cover 33 as a rotation center to open a portion of the top surface of the water tank 30. As a result, the opening closed by the drain cover 34 may be opened to drain the condensed water to the outside.

When the water filled in the case 31 is completely discharged, the user locates the lower end of the water tank 30 on the bottom of the installation surface. As a result, the drain cover 34 may freely rotate by a self-weight thereof to cover a portion of the opened top surface of the case 31 again.

In the state where the drain cover 34 covers a portion of the opened top surface of the case 31, the user may mount the water tank 30 on the main body 20 by reversely performing the process of separating the water tank 30 from the main body 20.

The dehumidifier including the above-described constitutions according to example embodiments may have the following effects.

First, since the water level of the condensed water is detected by the plurality of sensors, overflowing of the condensed water may be prevented to improve safety in use of the dehumidifier.

Second, overflowing of the condensed water may be prevented to prevent the bottom of the installation space in which the dehumidifier is installed from getting dirty due to the overflowing condensed water. Thus, the space in which the dehumidifier is installed may be cleanly maintained.

Third, overflowing of the condensed water may be prevented to prevent the dehumidifier from being contaminated. Thus, life-cycle of the dehumidifier may be extended.

Fourth, overflowing of the condensed water may be prevented to improve product reliability of the dehumidifier.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the appended claims.

## Claims

1. A dehumidifier comprising:
a main body (20) having a water tank chamber (90);
a compressor (71) for compressing a refrigerant;
a heat exchange unit (40) inside of the main body;
a fan assembly (50) mounted on a side of the heat exchange unit (40) to forcibly blow air within the main body (20); and
a water tank (30), accommodated in the water tank chamber, for storing condensed water formed on the heat exchange unit;
a movable member (311) movable inside the water tank based on water level in the water tank;
a first sensor (92) configured to detect the movable member at a first water level;
a second sensor (93) configured to detect the movable member at a second water level, the second water level being higher than the first water level;
and
a control unit configured to, based on results received from the first and second sensors, control operation of the heat exchange unit and/or generate an alarm signal,
wherein the control unit is configured, in response to the first sensor (92)'s detection of the movable member (311), to generate a high level warning signal to empty the water tank (30), and
wherein the control unit is configured, in response to the second sensor (93)'s detection of the movable member (311), to generate a full level warning signal and stop the operation of the compressor (71) or the fan assembly (50) to prevent the condensed water from being further generated in the heat exchange unit (40).

2. The dehumidifier according to claim 1, wherein the second water level is higher than the first water level.

3. The dehumidifier according to claim 1 or 2,
wherein the first sensor (92) is disposed at a wall of the water tank chamber (90); and
wherein the second sensor (93) is disposed at said wall of the water tank chamber (90) at a position higher than the first sensor (92).

4. The dehumidifier according to any of preceding claims, wherein the water tank (30) comprises a guide module for guiding the movable member (311),
wherein the guide module includes:
a sensor room (312) for accommodating the movable member (311); and
a room cover (313) to cover an open surface of the sensor room.

5. The dehumidifier according to any of preceding claims, wherein the movable member (311) includes:
a magnetic body (311a); and
a movable body (311b) for accommodating the magnetic body therein.

6. The dehumidifier according to claim 5, wherein each of the first and second sensors (92, 93) includes a hall sensor to detect magnetism from the magnetic body (311a).

7. The dehumidifier according to claim 5 or 6, wherein at least a portion of the movable body (311b) is formed of transparent material.

8. The dehumidifier according to any of preceding claims, wherein the high level warning signal includes one of sound, light, a color, an image, and a moving picture or a combination thereof.

9. The dehumidifier according to any of preceding claims, wherein the water tank (30) is separably mounted to the main body (20).

10. The dehumidifier according to any of preceding claims, further comprising one or more of such first sensors (92) each configured to detect the movable member (311) at a different water level.

## Patentansprüche

1. Entfeuchter, der aufweist:
einen Hauptkörper (20) mit einer Wassertankkammer (90);
einen Verdichter (71) zum Verdichten eines Kältemittels;
eine Wärmetauscheinheit (40) innerhalb des Hauptkörpers;
eine Gebläseanordnung (50), die an einer Seite der Wärmetauscheinheit (40) angebracht ist, um zwangsweise Luft in den Hauptkörper (20) zu blasen; und
einen Wassertank (30), der in der Wassertankkammer untergebracht ist, zum Speichern von Kondenswasser, das an der Wärmetauscheinheit gebildet wird;
ein bewegliches Element (311), das innerhalb des Wassertanks beruhend auf dem Wasserstand im Wassertank beweglich ist;
einen ersten Sensor (92), der konfiguriert ist, das bewegliche Element bei einem ersten Wasserstand zu erfassen;
einen zweiten Sensor (93), der konfiguriert ist, das bewegliche Element bei einem zweiten Wasserstand zu erfassen, wobei der zweite Wasserstand höher als der erste Wasserstand ist; und
eine Steuereinheit, die konfiguriert ist, beruhend auf vom ersten und zweiten Sensor empfangenen Ergebnissen den Betrieb der Wärmetauscheinheit zu steuern und/oder ein Alarmsignal zu erzeugen,
wobei die Steuereinheit konfiguriert ist, als Reaktion auf die Erfassung des beweglichen Elements (311) durch den ersten Sensor (92) ein Warnsignal vor einem hohen Wasserstand zu erzeugen, um den Wassertank (30) zu entleeren, und
wobei die Steuereinheit konfiguriert ist, als Reaktion auf die Erfassung des beweglichen Elements (311) durch den zweiten Sensor (93) ein Warnsignal vor einem vollen Wasserstand zu erzeugen und den Betrieb des Verdichters (71) oder der Gebläseanordnung (50) zu stoppen, um zu verhindern, dass das Kondenswasser in der Wärmetauscheinheit (40) weiter erzeugt wird.

2. Entfeuchter nach Anspruch 1, wobei der zweite Wasserstand höher als der erste Wasserstand ist.

3. Entfeuchter nach Anspruch 1 oder 2,
wobei der erste Sensor (92) an einer Wand der Wassertankkammer (90) angeordnet ist; und
wobei der zweite Sensor (93) an der Wand der Wassertankkammer (90) an einer höheren Position als der erste Sensor (92) angeordnet ist.

4. Entfeuchter nach einem der vorhergehenden Ansprüche, wobei der Wassertank (30) ein Führungsmodul zum Führen des beweglichen Elements (311) aufweist, wobei das Führungsmodul aufweist:
einen Sensorraum (312) zum Unterbringen des beweglichen Elements (311); und
eine Raumabdeckung (313), um eine offene Oberfläche des Sensorraums abzudecken.

5. Entfeuchter nach einem der vorhergehenden Ansprüche, wobei das bewegliche Element (311) aufweist:
einen magnetischen Körper (311a); und
einen beweglichen Körper (311b) zum Unterbringen des magnetischen Körpers darin.

6. Entfeuchter nach Anspruch 5, wobei jeweils der erste und der zweite Sensor (92, 93) einen Hall-Sensor aufweisen, um einen Magnetismus vom magnetischen Körper (311a) zu erfassen.

7. Entfeuchter nach Anspruch 5 oder 6, wobei mindestens ein Abschnitt des beweglichen Körpers (311 b) aus einem transparenten Material ausgebildet ist.

8. Entfeuchter nach einem der vorhergehenden Ansprüche, wobei das Warnsignal vor einem hohen Wasserstand einen Ton oder Licht oder eine Farbe oder ein Bild und einen Film oder eine Kombination davon aufweist.

9. Entfeuchter nach einem der vorhergehenden Ansprüche, wobei der Wassertank (30) getrennt am Hauptkörper (20) angebracht ist.

10. Entfeuchter nach einem der vorhergehenden Ansprüche, der ferner einen oder mehrere solcher ersten Sensoren (92) aufweist, die jeweils konfiguriert sind, das bewegliche Element (311) an einem unterschiedlichen Wasserstand zu erfassen.

## Revendications

1. Déshumidificateur, comprenant :
un corps principal (20) ayant un compartiment de réservoir d'eau (90) ;
un compresseur (71) pour comprimer un réfrigérant ;
une unité d'échange de chaleur (40) à l'intérieur du corps principal ;
un ensemble de ventilateur (50) monté sur un côté de l'unité d'échange de chaleur (40) pour refouler de manière forcée de l'air vers l'intérieur du corps principal (20) ; et
un réservoir d'eau (30) logé dans le compartiment de réservoir d'eau pour stocker l'eau de condensation formée sur l'unité d'échange de chaleur ;
un élément mobile (311) déplaçable à l'intérieur du réservoir d'eau en fonction du niveau d'eau dans le réservoir d'eau ;
un premier capteur (92) prévu pour détecter l'élément mobile à un premier niveau d'eau ;
un deuxième capteur (93) prévu pour détecter l'élément mobile à un deuxième niveau d'eau, ledit deuxième niveau d'eau étant supérieur au premier niveau d'eau ; et
une unité de commande prévue pour commander le fonctionnement de l'unité d'échange de chaleur et/ou générer un signal d'alarme en fonction des résultats reçus du premier et du deuxième capteurs,
où l'unité de commande est prévue pour générer un signal d'avertissement de niveau élevé pour vider le réservoir d'eau (30), en réaction à la détection de l'élément mobile (311) par le premier capteur (92), et
où l'unité de commande est prévue, pour générer un signal d'avertissement de niveau maximum en réaction à la détection de l'élément mobile (311) par le deuxième capteur (93), et arrêter le fonctionnement du compresseur (71) ou de l'ensemble de ventilateur (50) afin d'empêcher la poursuite de génération d'eau de condensation dans l'unité d'échange de chaleur (40).

2. Déshumidificateur selon la revendication 1, où le deuxième niveau d'eau est supérieur au premier niveau d'eau.

3. Déshumidificateur selon la revendication 1 ou la revendication 2,
où le premier capteur (92) est disposé sur une paroi du compartiment de réservoir d'eau (90) ; et
où le deuxième capteur (93) est disposé sur ladite paroi du compartiment de réservoir d'eau (90), à un emplacement situé plus haut que le premier capteur (92).

4. Déshumidificateur selon l'une des revendications précédentes, où le réservoir d'eau (30) comprend un module de guidage pour guider l'élément mobile (311),
ledit module de guidage comprenant :
une chambre de capteur (312) pour le logement de l'élément mobile (311) ; et
un couvercle de chambre (313) pour la couverture d'une surface ouverte de la chambre de capteur.

5. Déshumidificateur selon l'une des revendications précédentes, où l'élément mobile (311) comprend :
un corps magnétique (311a) ; et
un corps mobile (311b) destiné à contenir le corps magnétique.

6. Déshumidificateur selon la revendication 5, où le premier et le deuxième capteurs (92, 93) comprennent chacun un capteur à effet Hall pour détecter le magnétisme du corps magnétique (311a).

7. Déshumidificateur selon la revendication 5 ou la revendication 6, où au moins une partie du corps mobile (311b) est constituée de matériau transparent.

8. Déshumidificateur selon l'une des revendications précédentes, où le signal d'avertissement de niveau élevé se compose d'un son, d'une lumière, d'une couleur, d'une image, d'une image animée ou d'une combinaison de ceux-ci.

9. Déshumidificateur selon l'une des revendications précédentes, où le réservoir d'eau (30) est monté de manière amovible sur le corps principal (20).

10. Déshumidificateur selon l'une des revendications précédentes, comprenant en outre un ou plusieurs premiers capteurs (92) prévus chacun pour détecter l'élément mobile (311) à un niveau d'eau différent.
